# FASCICULE DE BREVET EUROPEEN

(11) **EP 4 300 279 B1**
(45) Date de publication et mention de la délivrance du brevet: **02.09.2026**
(21) Numéro de dépôt: 23179705.1
(22) Date de dépôt: 16.06.2023
(51) Int. Cl.: G06F 3/04842, G06F 3/023

(54) **PROCÉDÉ ET DISPOSITIF D'IDENTIFICATION ET D EXTENSION DU CONTEXTE DE SAISIE D'UN UTILISATEUR, POUR EFFECTUER DES SUGGESTIONS CONTEXTUALISÉES QUELLE QUE SOIT L APPLICATION LOGICIELLE UTILISÉE**
VERFAHREN UND VORRICHTUNG ZUR IDENTIFIZIERUNG UND ERWEITERUNG DES BENUTZEREINGABEKONTEXTS ZUR DURCHFÜHRUNG VON KONTEXTVORSCHLÄGEN, DIE SICH WIE ETWA DIE SOFTWAREANWENDUNG VERWENDET WERDEN
METHOD AND APPARATUS FOR IDENTIFYING AND EXTENDING THE CONTEXT OF USER INPUT TO PERFORM CONTEXTUALIZED SUGGESTIONS IRRESPECTIVE OF SOFTWARE APPLICATION USED

(30) Priorité: 28.06.2022 FR 2206426
(43) Date de publication de la demande: 03.01.2024
(73) Titulaire: Orange, 92130 Issy-les-Moulineaux (FR)
(72) Inventeur: TIPHAINE, Marie, 92326 Chatillon (FR); LETELLIER, Jean-François, 92326 Chatillon (FR); MEYER, Frank, 92326 CHATILLON (FR)

(56) Documents cités:
- EP-A1- 3 399 765
- EP-A1- 3 905 131
- US-A1- 2016 179 967

## Description

### 1. Domaine de l'invention

L'invention se rapporte au domaine des télécommunications et concerne plus particulièrement un service d'aide(s) contextuelle(s) fourni, par exemple, par un ordinateur personnel.

### 2. Art Antérieur

Les services d'aides contextuelles proposés par une application informatique (Word^{™}, Writer^{™}, Excel^{™} etc.) à son utilisateur reposent sur l'analyse du contexte textuel de l'utilisateur au niveau de l'application. Le contexte textuel peut par exemple comprendre le texte saisi /dicté par l'utilisateur, les paramètres de mise en forme du texte, les mouvements et/ou la position du curseur, etc.

Les services d'aides contextuelles correspondent par exemple à :
- de l'aide à la correction (orthographe, grammaire...), sur la dernière phrase entrée ;
- de la suggestion de complétion automatique, en fonction du texte et des derniers mots tapés/ saisis ;
- de la suggestion d'informations (par exemple issues d'Internet, d'un intranet, d'un disque local) en relation avec le texte sur lequel travaille l'utilisateur ;
- de la suggestion d'actions automatiques (lancer une application complémentaire, ouvrir un fichier spécifique) en relation avec le texte/ le document sur lequel travaille l'utilisateur.

Chaque application informatique qui propose ces services d'aides contextuelles utilise exclusivement les données de contexte textuel générées au sein de l'application. En outre, ces applications informatiques ne partagent pas leurs données de contexte textuel à des applications tierces. De plus, certaines applications informatiques ne proposent pas de tels services d'aides contextuelles.

D'autres documents de l'état de la technique décrivant des services d'aides contextuelles sont les suivants : EP 3 905 131 Al, US 2016/179967 Al, EP 3 399 765 Al.

Ainsi, force est de constater qu'il n'existe pas de solution permettant à une application tierce d'acquérir le contexte textuel de travail d'une application en cours d'utilisation par l'utilisateur, et ce quelle que soit l'application utilisée dans le but de proposer de manière transverse (indépendamment de l'application utilisée) des services d'aides contextuelles.

### 3. Exposé de l'invention

L'invention vient améliorer l'état de la technique et propose à cet effet un procédé selon la revendication 1.

Avantageusement, le procédé d'acquisition permet d'acquérir le contexte textuel de l'utilisateur d'un terminal/dispositif électronique et ce quelle que soit l'application / logiciel utilisé par celui-ci. Concrètement le procédé d'acquisition obtient au moins un caractère (par exemple le ou les derniers mots saisis / renseignés /dictés par l'utilisateur) depuis un périphérique d'entrée (clavier, souris, micro, etc.) du dispositif électronique. Le procédé d'acquisition obtient également une image représentative du contenu affiché par un périphérique d'affichage (écran, vidéo projecteur, etc.) du dispositif électronique (capture d'écran). Une fois l'image obtenue, une reconnaissance optique de caractères est appliquée à celle-ci et une retranscription du texte (suite(s) de caractères) présent au sein de l'image est obtenue par le procédé. Le procédé recherche ensuite le ou les derniers mots saisis par l'utilisateur au sein du texte obtenu, c'est-à-dire au sein d'une ou de plusieurs suites de caractères. Lorsque la recherche est positive, le procédé récupère depuis la ou les suites de caractères le contexte textuel dudit utilisateur.

On entend par périphérique d'entrée tout dispositif apte à interpréter une action d'un utilisateur sous forme de commandes, de fonctions ou d'instructions permettant l'impression, la mise en mémoire ou l'émission de caractères (alphanumérique, ponctuation, etc.). Le périphérique d'entrée est par exemple un clavier, un écran et/ou une surface tactile, une souris, un micro (via un logiciel de reconnaissance de la parole), etc.

On entend par périphérique d'affichage tout dispositif apte à restituer graphiquement un contenu multimédia (texte, interface graphique, image, vidéo, animation, liens cliquables, boutons, vignettes, etc.).

On entend par dispositif électronique tout dispositif apte au moins à gérer un périphérique d'affichage et/ou un périphérique d'entrée (ordinateur personnel, smartphone, tablette électronique, télévision, ordinateur de bord d'une voiture, objets connectés, etc.).

On entend par contexte textuel, le contexte textuel de saisie d'un utilisateur lorsque celui-ci saisit, via un logiciel de type « éditeur de texte », un ou plusieurs caractères. Le contexte textuel peut correspondre à un ou plusieurs mots saisis par l'utilisateur ou bien aux mots précédents et/ ou suivants le ou les caractères saisis par l'utilisateur. Le contexte textuel peut également comprendre les paramètres de mise en forme du texte, les mouvements et/ou la position du curseur, etc.

Selon un mode de mise en œuvre particulier de l'invention, un procédé tel que décrit ci-dessus est caractérisé en ce que l'étape d'acquisition est suivie d'une étape de suggestion d'un contenu multimédia en fonction dudit contexte textuel, ledit contenu multimédia étant affiché par ledit périphérique d'affichage à proximité d'un point d'intérêt positionné en fonction d'une donnée de position associée à au moins un caractère de ladite au moins une suite correspondant audit au moins un caractère obtenu.

Avantageusement, ce mode de réalisation permet de suggérer un contenu multimédia tel qu'une vidéo, une image ou un texte (par exemple sous forme d'une fenêtre graphique dédiée ou pop-up en anglais) en fonction du contexte textuel de l'utilisateur. Le ou les contenus multimédias suggérés sont affichés par le périphérique d'affichage à proximité d'un point d'intérêt ayant pour coordonnées les coordonnées de la position de travail de l'utilisateur.

Concrètement, la position de travail de l'utilisateur est déterminée grâce à la reconnaissance optique de caractères. En effet, la reconnaissance optique de caractères associe à chaque caractère du texte généré, la position du caractère au sein de l'image (de la capture d'écran). Ainsi, lorsqu'une correspondance est trouvée entre le ou les derniers mots saisis /dictés par l'utilisateur et un sous-ensemble du texte généré par la reconnaissance optique de caractères, le procédé peut déterminer la position du ou des derniers mots saisis / dictés au sein de l'image en récupérant la position d'un caractère compris dans le sous-ensemble (par exemple la position du dernier caractère du sous-ensemble). Une fois la position /localisation de la position de travail /de saisie de l'utilisateur déterminée, le procédé récupère le contexte textuel dudit utilisateur. Le procédé suggère ensuite des contenus multimédias en fonction du contexte textuel récupéré. Les contenus sont affichés par le périphérique d'affichage du dispositif électronique à proximité d'un point d'intérêt ayant pour coordonnées les coordonnées de la position de travail de l'utilisateur.

En effet, l'image obtenue étant fidèle au contenu affiché par le périphérique d'affichage du dispositif électronique, les coordonnées d'un point d'intérêt de l'image correspondent aux coordonnées du même point d'intérêt affiché par le périphérique d'affichage.

La localisation peut par exemple correspondre à des coordonnées (en pixel, en centimètre, etc.) interprétables par le périphérique d'affichage du dispositif électronique. Alternativement ou cumulativement, le procédé peut déclencher l'exécution d'un logiciel au niveau du dispositif électronique en fonction du contexte textuel de l'utilisateur. Par exemple, lorsque l'utilisateur rédige un courriel et saisit un texte qui est interprété comme une proposition de rendez-vous, le procédé peut alors déclencher l'exécution d'une application d'agenda afin que l'utilisateur puisse y reporter le rendez-vous et ainsi bloquer le créneau horaire proposé.

Selon un mode de mise en œuvre particulier de l'invention, un procédé tel que décrit ci-dessus est caractérisé en ce que ledit contexte textuel comprend un sous-ensemble de ladite suite subséquent et/ou précédant ledit au moins un caractère de ladite suite correspondant audit au moins un caractère obtenu.

Ce mode de réalisation permet de prendre en compte le ou les mots situés avant et/ou après le ou les derniers mots saisis /dictés par l'utilisateur. Cela correspond par exemple à l'insertion de mots par l'utilisateur au sein d'un texte préexistant. La prise en compte du ou des mots précédents et/ou suivants le ou les derniers mots saisis /dictés par l'utilisateur peut permettre d'améliorer la pertinence d'un contenu textuel suggéré (complétion, informations, etc.).

Selon un mode de mise en œuvre particulier de l'invention, un procédé tel que décrit ci-dessus est caractérisé en ce que ladite reconnaissance optique de caractères est appliquée à une partie de ladite image dont les coordonnées sont déterminées en fonction d'au moins une donnée de position associée à une partie dudit contenu affiché, regardée par un utilisateur, ladite au moins une deuxième donnée de position étant obtenue après une étape d'évaluation d'une durée pendant laquelle une analyse des mouvements oculaires dudit utilisateur capturés par une caméra dudit dispositif électronique indique que le regard dudit utilisateur reste dirigé sur ladite partie dudit contenu affiché.

Ce mode de réalisation permet de circonscrire l'exécution de la reconnaissance optique de caractères à une zone /partie de l'image représentative du contenu affiché par le périphérique d'affichage du dispositif électronique. Pour ce faire, le procédé analyse les mouvements oculaires (oculométrie ou en anglais Eye-tracking) de l'utilisateur capturés par une caméra du dispositif électronique. Lorsque l'analyse indique que le regard de l'utilisateur reste dirigé pendant une durée prédéfinie vers une zone /partie du contenu affiché par le dispositif d'affichage, le procédé récupère la position (coordonnées) du contenu regardé par l'utilisateur puis définit une zone de travail (par exemple un carré de 200 pixels de côté ayant pour centre les coordonnées récupérées). Le procédé réalise ensuite la reconnaissance optique de caractères sur une zone de l'image correspondant à la zone de travail définie (c'est-à-dire ayant les mêmes coordonnées). Ce mode de réalisation permet d'optimiser l'usage des ressources informatiques utilisées (mémoire, processeur, etc.).

Selon un mode de mise en œuvre particulier de l'invention, un procédé tel que décrit ci-dessus est caractérisé en ce que ladite reconnaissance optique de caractères est appliquée à une partie de ladite image dont les coordonnées correspondent à celles d'une fenêtre graphique active affichée par ledit dispositif d'affichage.

Ce mode de réalisation permet de circonscrire l'exécution de la reconnaissance optique de caractères à une zone /partie de l'image représentative du contenu affiché par le périphérique d'affichage du dispositif électronique correspondant à la fenêtre graphique active affichée par le périphérique d'affichage du dispositif électronique. Ce mode de réalisation permet d'optimiser l'usage des ressources (mémoire, processeur, etc.) nécessaires à l'exécution du procédé.

On entend par fenêtre graphique active, une fenêtre graphique affichée par un logiciel informatique en cours d'utilisation par un utilisateur (par exemple une fenêtre graphique qui a le « focus »).

Selon un mode de mise en œuvre particulier de l'invention, un procédé tel que décrit ci-dessus est caractérisé en ce qu'il est exécuté à intervalle régulier.

Ce mode de réalisation permet d'acquérir le contexte textuel de l'utilisateur au fil de l'eau. Cela permet par exemple au procédé d'adapter en temps réel les suggestions de contenus multimédias émises à destination de l'utilisateur

Selon un mode de mise en œuvre particulier de l'invention, un procédé tel que décrit ci-dessus est caractérisé en ce que l'exécution du procédé est stoppée en fonction de la valeur d'un sous ensemble de ladite suite précédant ledit au moins un caractère de ladite suite correspondant audit au moins un caractère obtenu.

Ce mode de réalisation permet d'arrêter l'exécution du procédé et donc l'acquisition du contexte textuel de l'utilisateur lorsque celui détecte un ou plusieurs caractères spéciaux (par exemple des étoiles ou des points), un mot ou un ensemble de mots prédéfinis au sein du texte généré par un procédé / logiciel de reconnaissance optique de caractères. Le ou les mots peuvent correspondre aux termes « password », « mot de passe », « code secret », ou tout autre élément textuel indiquant une zone et / ou un texte confidentiel. Ce mode de réalisation permet de garantir la confidentialité de certaines données.

Selon un mode de mise en œuvre particulier de l'invention, un procédé tel que décrit ci-dessus est caractérisé en ce que l'arrêt de l'exécution du procédé est suivi d'une étape d'émission d'une notification.

Ce mode de réalisation permet d'émettre une notification à destination de logiciels tiers demandant à ce que « l'écoute » des évènements en provenance des périphériques d'entrée soit stoppée. Cette notification peut, par exemple, être diffusée via le système d'exploitation du dispositif électronique.

Ce mode de réalisation permet également d'émettre une notification, à destination de l'utilisateur, lui indiquant que le procédé est arrêté. Cette notification peut par exemple se faire via un son spécifique, le clignotement d'une diode électroluminescente ou bien l'affichage d'un texte au niveau du périphérique d'affichage du dispositif électronique.

Selon un mode de mise en œuvre particulier de l'invention, un procédé tel que décrit ci-dessus est caractérisé en ce que l'exécution du procédé est stoppée en fonction de la valeur dudit au moins un caractère obtenu.

Ce mode de réalisation permet d'arrêter l'exécution du procédé lorsque celui détecte que le ou les derniers mots saisis /dictés par l'utilisateur ressemble à un mot de passe classique. Par exemple un mot de 6 caractères ou plus, non présent dans un dictionnaire et comportant des caractères spéciaux.

L'invention concerne également un dispositif d'acquisition selon la revendication 9.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également un programme d'ordinateur selon la revendication 10.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations selon la revendication 11. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif d'acquisition, ce système d'acquisition ainsi que ce programme d'ordinateur présentent des caractéristiques et avantages analogues à ceux décrits précédemment en relation avec le procédé d'acquisition.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en œuvre de l'invention selon un mode particulier de réalisation de l'invention,
[Fig 2] La figure 2 illustre l'architecture d'un dispositif adapté pour la mise en œuvre du procédé d'acquisition, selon un mode particulier de réalisation de l'invention,
[Fig 3] La figure 3 illustre les principales étapes du procédé d'acquisition selon un mode particulier de réalisation de l'invention.

### 5. Description d'un mode de réalisation de l'invention

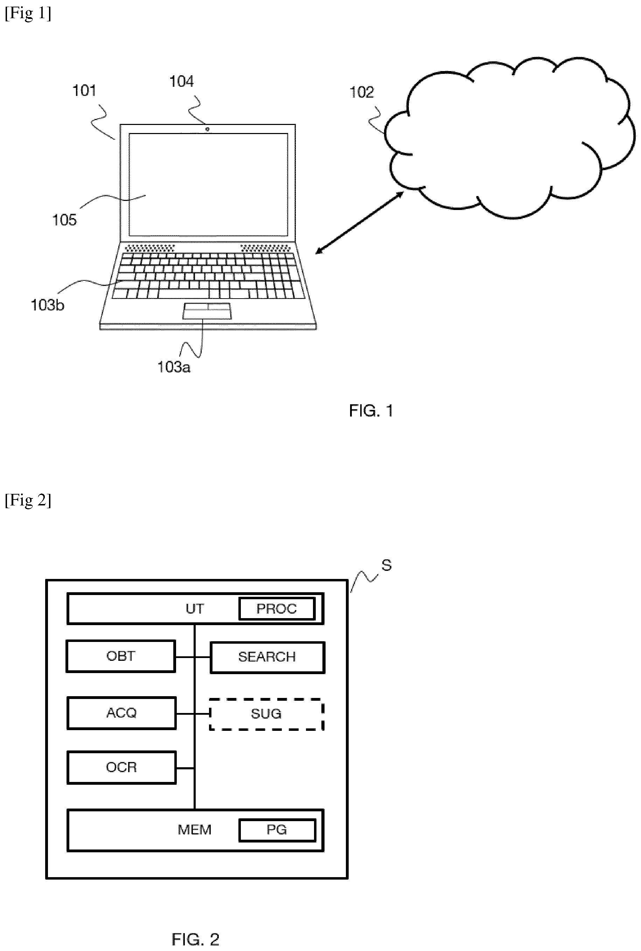

La figure 1 illustre un exemple d'environnement de mise en œuvre de l'invention selon un mode particulier de réalisation. L'environnement représenté en figure 1 comprend au moins un terminal 101 qui intègre un dispositif d'acquisition d'un contexte textuel apte à mettre en œuvre le procédé d'acquisition d'un contexte textuel selon la présente invention.

Le procédé peut fonctionner de manière permanente et autonome dès l'activation de celui-ci ou bien à la suite d'une action utilisateur.

Selon d'autres modes de réalisation, le dispositif d'acquisition peut être situé dans le réseau et/ou réparti sur une ou plusieurs machines informatiques telles que des ordinateurs, des terminaux ou des serveurs.

Le terminal 101 est par exemple un terminal de type smartphone (téléphone intelligent en anglais), tablette, télévision connectée, objet connecté, ordinateur de bord d'une voiture, ordinateur personnel ou tout autre terminal apte à restituer un contenu multimédia visuellement et/ou vocalement. Un ou plusieurs périphériques de restitution graphique/d'affichage (105) ou sonore peuvent être connectés ou bien compris par le terminal 101 (connecté de façon filaire (via un câble VGA, HDMI, USB, etc.) ou bien sans fil (WiFi^{®}, Bluetooth^{®}, etc.). Ce ou ces périphériques de restitution peuvent par exemple être un écran, un vidéo projecteur, un haut-parleur, etc.).

Selon un mode particulier de réalisation de l'invention, le ou les périphériques de restitution graphique ou sonore peuvent être connectés au terminal 101 via le réseau 102.

De même, un ou plusieurs périphériques d'entrée (103a, 103b) peuvent être connectés ou bien compris par le terminal 101 (connecté de façon filaire (via un câble VGA, HDMI, USB, etc.) ou bien sans fil (WiFi^{®}, Bluetooth^{®}, etc.). Ce ou ces périphériques d'entrée peuvent par exemple être un clavier, une souris, une surface tactile, une caméra (104), un micro ou bien tout autre périphérique apte à fournir des données d'interaction en provenance de l'utilisateur du terminal 101.

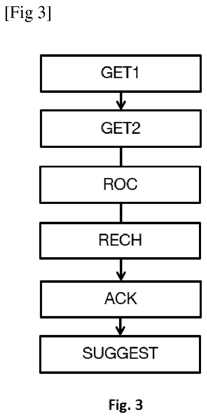

La figure 2 illustre un dispositif (S) configuré pour mettre en œuvre le procédé d'acquisition selon un mode particulier de réalisation de l'invention. Le dispositif (S) a l'architecture classique d'un ordinateur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé d'acquisition tel que décrit ultérieurement à l'appui de la figure 3, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé d'acquisition selon l'un quelconque des modes particuliers de réalisation décrits en relation avec la figure 3 et selon les instructions du programme d'ordinateur PG.

Le dispositif (S) comprend un module d'obtention OBT apte à obtenir au moins une donnée générée par un utilisateur (son, mouvement, clic, appui (long ou court), etc.) au niveau d'un périphérique d'entrée (103a (pavé tactile), 103b (clavier)) du terminal 101. Ces données sont ensuite interprétées et traduites en caractères. C'est par exemple le cas lors d'appuis sur les touches du clavier 103b du terminal 101, lors d'une action (mouvement, clic) réalisée sur une surface tactile (103a), lors d'une retranscription d'un discours en langage des signes captés par la caméra 104 du terminal 101 ou bien lors d'une retranscription d'un discours audio capté par un micro (non représenté) du terminal 101.

Le dispositif (S) comprend également un module reconnaissance optique de caractères (OCR) apte à réaliser une reconnaissance optique de caractères sur une image (capture d'image) représentative du contenu affiché par un périphérique d'affichage (105) du terminal 101 et à obtenir un texte (suite de caractères) en tant que résultat de la reconnaissance optique de caractères.

A noter que l'image est par exemple générée via un logiciel apte à réaliser une capture du contenu graphique d'un écran (105) du terminal 101.

Le dispositif (S) comprend également un module de recherche (SEARCH) apte à rechercher au sein du texte obtenu grâce à la reconnaissance optique de caractères le ou les caractères (par exemple un ou plusieurs mots) obtenus via le module OBT.

Le dispositif (S) comprend également un module d'acquisition ACQ apte à acquérir le contexte textuel de l'utilisateur en fonction de la position du ou des mots obtenus via le module OBT au sein du texte généré par la reconnaissance optique de caractères. Le contexte textuel peut comprendre le ou les caractères saisis par l'utilisateur ou bien le ou les mots précédents et/ ou suivants le ou les caractères saisis par l'utilisateur.

Le dispositif (S) peut en outre comprendre un module SUG apte à suggérer un contenu multimédia en fonction du contexte textuel de l'utilisateur obtenu par le module ACQ.

La figure 3 illustre des étapes du procédé d'acquisition selon un mode particulier de réalisation de l'invention. Dans cet exemple le procédé est exécuté par le terminal 101 et un utilisateur rédige un texte à l'aide d'un éditeur de texte exécuté par le terminal 101.

Lors de la première étape (GET1) le procédé obtient une première donnée en provenance d'un dispositif / périphérique d'entrée. Cette donnée correspond à une interprétation d'une action réalisée par un utilisateur du terminal 101 au niveau d'un périphérique d'entrée. Cette action est par exemple une succession d'appuis détectés au niveau du clavier (103b) du terminal / de l'ordinateur 101. La donnée correspond quant à elle à une interprétation sous forme de caractère(s) et/ou de chaînes de caractères des appuis effectués par l'utilisateur. Lors de cette étape le procédé obtient un chiffre ou un nombre prédéfini de caractères en provenance du périphérique d'entrée, le ou les caractères obtenus correspondant au(x) dernier(s) caractère(s) tapé(s) / saisies) par l'utilisateur au niveau du clavier. Concrètement, le ou les caractères tout juste tapés / saisis par l'utilisateur sont ajoutés / stockés dans une structure de donnée de taille prédéterminée telle qu'une liste de type FIFO (en anglais First In First Out). Les caractères ajoutés viennent remplir la liste jusqu'à ce que celle-ci soit pleine. Une fois la liste pleine, chaque caractère ajouté se fera en remplacement du plus ancien caractère contenu dans la liste. Ce mode de réalisation permet au procédé d'avoir à tout instant en mémoire le ou les derniers caractères (par exemple le ou les derniers mots) saisis /dictés par l'utilisateur au niveau du périphérique d'entrée du terminal 101.

Selon un mode particulier de réalisation de l'invention, lorsque l'utilisateur utilise les touches du clavier « retour arrière », « suppression », « flèche droite » et « flèche gauche », la liste est modifiée de façon à prendre en compte ces commandes / demandes d'action. Par exemple la suite de touches : B O K « retour_arrière » N J O P « flèche_gauche » « suppression » U R peut être recomposée en « BONJOUR ».

Lors de la deuxième étape (GET2) le procédé obtient une image représentative du contenu affiché par un périphérique d'affichage (105) du terminal 101. L'image est par exemple obtenue en provenance d'un logiciel exécuté par le terminal 101 apte à capturer le contenu graphique du périphérique d'affichage 105 du terminal 101.

Alternativement, l'image est obtenue en provenance d'un terminal tiers (par exemple une caméra ou un smartphone) positionné de façon à capturer le contenu affiché par un périphérique d'affichage (105) du terminal 101. Ce dernier cas peut impliquer la transmission de l'image par le terminal tiers au terminal 101.

Alternativement, le procédé génère une image représentative du contenu graphique du périphérique d'affichage 105 du terminal 101.

Une reconnaissance optique de caractères (étape ROC) est ensuite appliquée à l'image. La reconnaissance optique de caractères permet d'obtenir une retranscription du texte contenu dans l'image sous forme d'une suite / séquence de caractères, chaque caractère étant associé à une position au sein de l'image / capture d'écran.

Selon un mode particulier de réalisation de l'invention, la reconnaissance optique de caractères est réalisée par un logiciel tiers et le résultat, c'est-à-dire la retranscription du texte (suite / séquence de caractères et leur position associée), est émis par le logiciel tiers à destination du procédé.

Selon un mode particulier de réalisation de l'invention, le procédé réalise la reconnaissance optique de caractères au niveau de l'image.

Une fois la retranscription obtenue, le procédé recherche (étape RECH) le ou les caractères obtenus lors de l'étape GET1 au sein de la séquence de caractères. Lorsque la recherche est positive, le procédé d'acquisition récupère (ACK) le contexte textuel de l'utilisateur. Le contexte textuel peut comprendre :
- le ou les caractères saisis par l'utilisateur (obtenus lors de l'étape GET1) et/ou ;
- le ou les mots précédents le ou les caractères de la suite/ séquence correspondant aux caractères saisis par l'utilisateur et/ ou ;
- le ou les mots suivants le ou les caractères de la suite/ séquence correspondant aux caractères saisis par l'utilisateur.

Selon un mode particulier de réalisation de l'invention, lorsque le procédé détecte plusieurs occurrences de la chaîne de caractères obtenue lors de l'étape GET1 au sein de la séquence de caractères obtenue via la reconnaissance optique de caractères, le procédé peut augmenter la taille de la liste gérée au niveau de l'étape GET1. En effet, plus la liste comporte un nombre élevé de caractères (c'est-à-dire plus la chaîne de caractères est grande), plus la probabilité d'avoir plusieurs fois cette chaîne de caractères au sein de la séquence de caractères est faible.

Selon un mode particulier de réalisation de l'invention, le procédé propose (étape SUGGEST) un ou plusieurs contenus multimédia (image, texte, vidéo, etc.) à l'utilisateur du terminal 101 en fonction du contexte textuel de l'utilisateur récupéré lors de l'étape ACK. Les contenus suggérés sont par exemple affichés par l'écran 105 du terminal 101 à proximité de la position d'un point d'intérêt correspondant à l'emplacement, au sein de l'image, du ou des caractères obtenus lors de l'étape GET1. La position du ou des caractères obtenus lors de l'étape GET1 est déterminée grâce aux positions (par exemple des coordonnées en pixels) associées aux caractères de la séquence correspondant aux caractères obtenus lors de l'étape GET1. Les positions des caractères de la séquence au sein de l'image et donc au sein du contenu affiché par le périphérique d'affichage 105 sont déterminées via la reconnaissance optique de caractères. A noter que l'affichage peut se faire via une fenêtre graphique dédiée (ou pop-up en anglais).

Selon un mode particulier de réalisation de l'invention, le ou les contenus multimédias suggérés peuvent également être fonction d'un sous-ensemble de caractères de taille prédéfinie de la séquence de caractères, le sous-ensemble pouvant être situé avant et/ou après le ou les caractères correspondant aux caractères recherchés (c'est-à-dire du ou des caractères obtenus lors de l'étape GET1). Ce mode de réalisation permet de prendre en compte, un ou plusieurs mots situés avant et /ou après un mot / texte inséré par l'utilisateur afin d'améliorer la pertinence des contenus textuels suggérés.

Selon un mode particulier de réalisation de l'invention, la reconnaissance optique de caractères peut être appliquée à une partie /zone de l'image déterminée en fonction d'une analyse des mouvements oculaires (oculométrie ou en anglais Eye-tracking) de l'utilisateur capturés par une caméra 104 du terminal 101. Concrètement, lorsque le procédé constate que le regard de l'utilisateur reste dirigé pendant un laps de temps /une durée prédéterminée vers une zone /partie de l'écran 105, celui-ci récupère la position du contenu regardé par l'utilisateur puis définit une zone de travail (par exemple un carré de 200 pixels de côté ayant pour centre les coordonnées récupérées). Le procédé réalise ensuite la reconnaissance optique de caractères sur une zone de l'image correspondant à la zone de travail définie (c'est-à-dire ayant les mêmes coordonnées). Ce mode de réalisation permet d'optimiser l'usage des ressources informatiques (mémoire, processeur, etc.) nécessaires à l'exécution de la reconnaissance optique de caractères.

Selon un mode particulier de réalisation de l'invention, la zone de travail est déterminée lorsque le regard de l'utilisateur reste dirigé une pluralité de fois pendant un laps de temps prédéterminé vers une zone /partie de l'écran 105

Selon un mode particulier de réalisation de l'invention, la reconnaissance optique de caractères peut être appliquée à une partie /zone de l'image correspondant à une fenêtre graphique active affichée par un logiciel informatique au niveau de l'écran 105. Pour ce faire, le procédé obtient, par exemple via une reconnaissance d'images ou via le système d'exploitation du terminal 101, les coordonnées des 4 coins de la fenêtre active graphique affichée sur l'écran 105. Le procédé réalise ensuite la reconnaissance optique de caractères sur la zone de l'image correspondant à la zone de la fenêtre graphique, c'est-à-dire ayant les mêmes coordonnées. De même, ce mode de réalisation permet d'optimiser l'usage des ressources (mémoire, processeur, etc.) nécessaires à l'exécution de la reconnaissance optique de caractères.

Selon un mode particulier de réalisation de l'invention, le procédé d'acquisition est exécuté à intervalle régulier.

Selon un mode particulier de réalisation de l'invention, l'exécution du procédé d'acquisition est stoppée en fonction du résultat d'un test d'un sous-ensemble de caractères de taille prédéfinie de la séquence de caractères, le sous-ensemble étant situé avant le ou les caractères correspondant aux caractères recherchés (c'est-à-dire du ou des caractères obtenus lors de l'étape GET1).

Ce mode de réalisation permet d'arrêter l'exécution du procédé et donc l'acquisition du contexte textuel de l'utilisateur lorsque celui détecte un ou plusieurs caractères spéciaux (par exemple des étoiles ou des points), un mot ou un ensemble de mots prédéfinis au sein d'une séquence/suite de caractères générée par la reconnaissance optique de caractères. Le ou les mots peuvent correspondre aux termes « password », « mot de passe », « code secret », ou tout autre élément textuel indiquant une zone et / ou un texte confidentiel.

Lorsque le procédé s'arrête, une notification peut être émise à destination de l'utilisateur lui indiquant que le procédé est en cours d'arrêt ou arrêté. Cette notification peut par exemple se faire via un son spécifique, le clignotement d'une diode électroluminescente ou bien l'affichage d'un texte au niveau du périphérique d'affichage du terminal 101. Alternativement ou cumulativement une notification peut être émise à destination de logiciels tiers demandant à ce que « l'écoute » des évènements (c'est-à-dire l'obtention de caractères) en provenance des périphériques d'entrée soit stoppée. Cette notification peut par exemple être diffusée via le système d'exploitation du dispositif électronique.

Selon un mode particulier de réalisation de l'invention, l'arrêt peut être effectif pendant un laps de temps prédéterminé ou bien jusqu'à ce que l'utilisateur relance (réexécute) le procédé.

Selon un mode particulier de réalisation de l'invention, l'exécution du procédé d'acquisition est stoppée en fonction du résultat d'un test de la chaîne de caractères obtenue lors de l'étape GET1. Concrètement, le procédé teste la structure de la chaîne de caractères afin de déterminer si celle-ci comprend des caractères spéciaux et comporte un nombre de caractères supérieur à un seuil prédéfini. Par exemple, lorsque la chaîne de caractères saisie par l'utilisateur correspond à un mot de 6 caractères ou plus, non présent dans un dictionnaire et comporte des caractères spéciaux, il est fort probable que l'utilisateur ait saisi un identifiant ou un mot de passe. Dans ce cas, le procédé ne propose pas de contenus textuels. Ainsi, l'obtention des caractères saisis par l'utilisateur via le périphérique d'entrée est arrêtée et une notification sonore et/ou visuelle peut être émise à destination de l'utilisateur pour l'en informer. L'arrêt est par exemple effectif pendant un laps de temps prédéterminé ou bien jusqu'à ce que l'utilisateur relance le procédé. Alternativement ou cumulativement une notification peut être émise à destination de logiciels tiers demandant à ce que « l'écoute » des évènements (c'est-à-dire l'obtention de caractères) en provenance des périphériques d'entrée soit stoppée. Cette notification peut par exemple être diffusée via le système d'exploitation du dispositif électronique.

## Revendications

1. Procédé de suggestion d'un contexte textuel d'un utilisateur **caractérisé en ce que** le procédé comprend :
- une étape d'obtention (GET1) d'au moins un caractère en provenance d'au moins un périphérique d'entrée (103a, 103b) d'un dispositif électronique (101) ;
- une étape de reconnaissance optique de caractères (ROC) appliquée à tout ou partie d'une image représentative d'un premier contenu affiché par au moins un périphérique d'affichage dudit dispositif électronique pour obtenir une suite de caractères ;
- une étape de recherche (RECH) dudit au moins un caractère au sein de ladite suite de caractères
et lorsque la recherche est positive
- une étape d'acquisition (ACK), depuis ladite suite de caractères, dudit contexte textuel, ledit contexte textuel comprenant un sous-ensemble de ladite suite de caractères subséquent et/ou précédant ledit au moins un caractère ;
- une étape de suggestion (SUGGEST) d'un second contenu en fonction dudit contexte textuel.

2. Procédé selon la revendication 1 **caractérisé en ce que** ledit second contenu correspond à un contenu multimédia et/ou une image et/ou un texte et/ou une vidéo et/ou un ou plusieurs éléments cliquables et **en ce que** ledit second contenu est affiché par ledit périphérique d'affichage (105) à proximité d'un point d'intérêt positionné en fonction d'une donnée de position associée à au moins un caractère de ladite au moins une suite correspondant audit au moins un caractère obtenu.

3. Procédé selon la revendication 1 **caractérisé en ce que** ladite reconnaissance optique de caractères (ROC) est appliquée à une partie de ladite image dont les coordonnées sont déterminées en fonction d'au moins une donnée de position associée à une partie dudit contenu affiché, regardée par un utilisateur, ladite au moins une deuxième donnée de position étant obtenue après une étape d'évaluation d'une durée pendant laquelle une analyse des mouvements oculaires dudit utilisateur capturés par une caméra dudit dispositif électronique indique que le regard dudit utilisateur reste dirigé sur ladite partie dudit contenu affiché.

4. Procédé selon la revendication 1 **caractérisé en ce que** ladite reconnaissance optique de caractères (ROC) est appliquée à une partie de ladite image dont les coordonnées correspondent à celles d'une fenêtre graphique active affichée par ledit dispositif d'affichage.

5. Procédé selon la revendication 1 **caractérisé en ce qu'**il est exécuté à intervalle régulier.

6. Procédé selon la revendication 1 **caractérisé en ce que** l'exécution du procédé est stoppée en fonction de la valeur d'un sous-ensemble de ladite suite précédant ledit au moins un caractère de ladite suite correspondant audit au moins un caractère obtenu.

7. Procédé selon la revendication 6 **caractérisé en ce que** l'arrêt de l'exécution du procédé est suivi d'une étape d'émission d'une notification.

8. Procédé selon la revendication 1 **caractérisé en ce que** l'exécution du procédé est stoppée en fonction de la valeur dudit au moins un caractère obtenu.

9. Dispositif de suggestion d'un contexte textuel d'un utilisateur **caractérisé en ce que** le dispositif comprend :
- un module d'obtention (OBT) apte à obtenir au moins un caractère en provenance d'au moins un périphérique d'entrée d'un dispositif électronique ;
- un module de reconnaissance optique de caractères (OCR) apte à réaliser une reconnaissance optique de caractères sur tout ou partie d'une image représentative d'un premier contenu affiché par au moins un périphérique d'affichage dudit dispositif électronique et permettant l'obtention d'une suite de caractères associée à ladite reconnaissance optique de caractères réalisée ;
- un module de recherche (SEARCH) dudit au moins un caractère au sein de ladite suite de caractères ;
- un module d'acquisition (ACQ), depuis ladite suite de caractères, dudit contexte textuel, ledit contexte textuel comprenant un sous-ensemble de ladite suite de caractères subséquent et/ou précédant ledit au moins un caractère ;
- un module de suggestion (SUG) d'un second contenu en fonction dudit contexte textuel.

10. Programme d'ordinateur comportant les instructions pour l'exécution du procédé d'acquisition selon l'une quelconque des revendications 1 à 8, lorsque le programme est exécuté par un processeur.

11. Support d'enregistrement lisible par ordinateur sur lequel est enregistré un programme d'ordinateur selon la revendication 10.

## Patentansprüche

1. Verfahren zum Vorschlagen eines Textkontexts eines Benutzers, **dadurch gekennzeichnet, dass** das Verfahren umfasst:
- einen Schritt des Erhaltens (GET1) mindestens eines Zeichens von mindestens einem Eingabeperipheriegerät (103a, 103b) einer elektronischen Vorrichtung (101);
- einen Schritt der optischen Zeichenerkennung (OCR), der auf das gesamte oder einen Teil eines Bilde angewendet wird, das für einen ersten Inhalt repräsentativ ist, der durch mindestens ein Anzeigeperipheriegerät der elektronischen Vorrichtung angezeigt wird, um eine Zeichenfolge zu erhalten;
- einen Schritt des Suchens (RECH) des mindestens einen Zeichens in der Zeichenfolge
und, wenn die Suche positiv ist,
- einen Schritt des Erfassens (ACK), aus der Zeichenfolge, des Textkontextes, wobei der Textkontext eine Teilmenge der Zeichenfolge umfasst, die dem mindestens einen Zeichen folgt und/oder vorausgeht;
- einen Schritt des Vorschlagens (SUGGEST) eines zweiten Inhalts in Abhängigkeit von dem Textkontext.

2. Verfahren nach Anspruch 1, **dadurch gekennzeichnet, dass** der zweite Inhalt einem Multimedia-Inhalt und/oder einem Bild und/oder einem Text und/oder einem Video und/oder einem oder mehreren anklickbaren Elementen entspricht, und dass der zweite Inhalt durch das Anzeigeperipheriegerät (105) in der Nähe eines Punktes von Interesse angezeigt wird, der in Abhängigkeit von einem Positionsdatenelement positioniert ist, das mindestens einem Zeichen der mindestens einen Folge zugeordnet ist, die dem mindestens einen erhaltenen Zeichen entspricht.

3. Verfahren nach Anspruch 1, **dadurch gekennzeichnet, dass** die optische Zeichenerkennung (OCR) auf einen Teil des Bildes angewendet wird, dessen Koordinaten in Abhängigkeit von mindestens einem Positionsdatenelement bestimmt werden, das einem Teil des angezeigten Inhalts zugeordnet ist, und der von einem Benutzer betrachtet wird, wobei das mindestens eine zweite Positionsdatenelement nach einem Schritt des Bewertens einer Dauer erhalten wird, während der eine Analyse der Augenbewegungen des Benutzers, die von einer Kamera der elektronischen Vorrichtung erfasst werden, angibt, dass der Blick des Benutzers auf den Teil des angezeigten Inhalts gerichtet bleibt.

4. Verfahren nach Anspruch 1, **dadurch gekennzeichnet, dass** die optische Zeichenerkennung (OCR) auf einen Teil des Bildes angewendet wird, dessen Koordinaten denen eines aktiven graphischen Fensters entsprechen, das durch die Anzeigevorrichtung angezeigt wird.

5. Verfahren nach Anspruch 1, **dadurch gekennzeichnet, dass** es in regelmäßigen Abständen ausgeführt wird.

6. Verfahren nach Anspruch 1, **dadurch gekennzeichnet, dass** die Ausführung des Verfahrens in Abhängigkeit von dem Wert einer Teilmenge der Folge gestoppt wird, die dem mindestens einen Zeichen der Folge vorausgeht, das dem mindestens einen erhaltenen Zeichen entspricht.

7. Verfahren nach Anspruch 6, **dadurch gekennzeichnet, dass** auf das Abbrechen der Ausführung des Verfahrens ein Schritt des Ausgebens einer Benachrichtigung folgt.

8. Verfahren nach Anspruch 1, **dadurch gekennzeichnet, dass** die Ausführung des Verfahrens in Abhängigkeit von dem Wert des mindestens einen erhaltenen Zeichens gestoppt wird.

9. Vorrichtung zum Vorschlagen eines Textkontexts eines Benutzers, **dadurch gekennzeichnet, dass** die Vorrichtung umfasst:
- ein Erhaltungsmodul (OBT), das in der Lage ist, mindestens ein Zeichen von mindestens einem Eingabeperipheriegerät einer elektronischen Vorrichtung zu erhalten;
- ein Modul zur optischen Zeichenerkennung (OCR), das in der Lage ist, eine optische Zeichenerkennung an dem gesamten oder einem Teil eines Bildes auszuführen, das für einen ersten Inhalt repräsentativ ist, der durch mindestens ein Anzeigeperipheriegerät der elektronischen Vorrichtung angezeigt wird, und das Erhalten einer Zeichenfolge ermöglicht, die der ausgeführten optischen Zeichenerkennung zugeordnet ist;
- ein Suchmodul (SEARCH) zum Suchen des mindestens einen Zeichens in der Zeichenfolge;
- ein Erfassungsmodul (ACQ) zum Erfassen, aus der Zeichenfolge, des Textkontextes, wobei der Textkontext eine Teilmenge der Zeichenfolge umfasst, die dem mindestens einen Zeichen folgt und/oder vorausgeht;
- ein Vorschlagsmodul (SUG) zum Vorschlagen eines zweiten Inhalts in Abhängigkeit von dem Textkontext.

10. Computerprogramm, das Anweisungen umfasst, die bei der Ausführung des Programms durch einen Prozessor das Verfahren zur Erfassung nach einem der Ansprüche 1 bis 8 ausführen.

11. Computerlesbares Speichermedium, auf dem ein Computerprogramm nach Anspruch 10 gespeichert ist.

## Claims

1. Method for suggesting a textual context of a user, **characterized in that** the method comprises:
- a step of obtaining (GET1) of at least one character originating from at least one input peripheral device (103a, 103b) of an electronic device (101);
- a step of optical character recognition (ROC) applied to all or part of an image representative of a first content displayed by at least one display peripheral device of said electronic device to obtain a character sequence;
- a step of searching (RECH) for said at least one character in said character sequence
and, when the search is positive
- a step of acquisition (ACK), from said character sequence, of said textual context, said textual context comprising a subset of said character sequence following and/or preceding said at least one character;
- a step of suggestion (SUGGEST) of a second content as a function of said textual context.

2. Method according to Claim 1, **characterized in that** said second content corresponds to a multimedia content and/or an image and/or a text and/or a video and/or one or more clickable elements and **in that** said second content is displayed by said display peripheral device (105) in proximity to a point of interest positioned as a function of a position datum associated with at least one character of said at least one sequence corresponding to said at least one character obtained.

3. Method according to Claim 1, **characterized in that** said optical character recognition (ROC) is applied to a part of said image whose coordinates are determined as a function of at least one position datum associated with a part of said displayed content, watched by a user, said at least one second position datum being obtained after a step of assessment of a time during which an analysis of the ocular movements of said user captured by a camera of said electronic device indicates that the gaze of said user remains directed to said part of said displayed content.

4. Method according to Claim 1, **characterized in that** said optical character recognition (ROC) is applied to a part of said image whose coordinates correspond to those of an active graphic window displayed by said display device.

5. Method according to Claim 1, **characterized in that** it is executed at regular intervals.

6. Method according to Claim 1, **characterized in that** the execution of the method is stopped as a function of the value of a subset of said sequence preceding said at least one character of said sequence corresponding to said at least one character obtained.

7. Method according to Claim 6, **characterized in that** the stopping of the execution of the method is followed by a step of issuing of a notification.

8. Method according to Claim 1, **characterized in that** the execution of the method is stopped as a function of the value of said at least one character obtained.

9. Device for suggesting a textual context of a user, **characterized in that** the device comprises:
- an obtaining module (OBT) capable of obtaining at least one character originating from at least one input peripheral device of an electronic device;
- an optical character recognition module (OCR) capable of performing an optical character recognition over all or part of an image representative of a first content displayed by at least one display peripheral device of said electronic device and making it possible to obtain a character sequence associated with said optical character recognition performed;
- a search module (SEARCH) for searching for said at least one character in said character sequence;
- an acquisition module (ACQ) for acquiring, from said character sequence, said textual context, said textual context comprising a subset of said character sequence following and/or preceding said at least one character;
- a suggestion module (SUG) for suggesting a second content as a function of said textual context.

10. Computer program comprising instructions for the execution of the acquisition method according to any one of Claims 1 to 8, when the program is run by a processor.

11. Computer-readable storage medium on which a computer program according to Claim 10 is stored.
